# EUROPEAN PATENT SPECIFICATION

(11) **EP 1 184 685 B1**
(45) Date of publication and mention of the grant of the patent: **27.12.2006**
(21) Application number: 01120616.6
(22) Date of filing: 29.08.2001
(51) Int. Cl.: G02B 1/11

(54) **Optical element having anti-reflection film**
Optisches Element mit Antireflexbeschichtung
Elément optique avec traitement anti-réfléchissant

(30) Priority: 29.08.2000 JP 2000258628; 27.04.2001 JP 2001130754
(43) Date of publication of application: 06.03.2002
(73) Proprietor: HOYA CORPORATION, Shinjuku-ku, Tokyo 161-8525 (JP)
(72) Inventor: Mitsubishi, Takeshi, Shinjyu-ku, Tokyo 161-8525 (JP); Kamura, Hitoshi, Shinjyu-ku, Tokyo 161-8525 (JP); Shinde, Kenichi, Shinjyu-ku, Tokyo 161-8525 (JP)
(74) Representative: HOFFMANN EITLE

(56) References cited:
- DE-A- 2 730 759
- DE-A- 4 427 215
- GB-A- 1 381 485
- US-A- 5 181 141
- US-A- 5 589 280
- US-A- 5 725 959
- US-A- 5 942 338
- BERNING P H: "USE OF EQUIVALENT FILMS IN THE DESIGN OF INFRARED MULTILAYER ANTIREFLECTION COATINGS" MODERNE TECHNIK VON A BIS Z, KOLN, VERLAG TUV RHEINLAND, DE, 1991, pages 192-197, XP000279749
- DATABASE WPI Section Ch, Week 199103 Derwent Publications Ltd., London, GB; Class A89, AN 1991-018878 XP002269186 -& JP 02 291501 A (HOYA CORP), 3 December 1990 (1990-12-03)
- EPSTEIN L.I.: "The Design of Optical Filters" JOURNAL OF THE OPTICAL SOCIETY OF AMERICA, vol. 42, no. 11, 30 November 1952 (1952-11-30), pages 806-810, XP002269185

## Description

### Technical Field of the Invention

The present invention relates to an optical element having an antireflection film a plastic substrate, in particular, to an optical element having an antireflection film on a plastic substrate, which has good heat resistance.

### Description of the Prior Art

Heretofore known are optical elements having an antireflection film formed on a plastic substrate. For example, Japanese Patent Laid-Open No. 291501/1990 discloses an optical element formed with an antireflection film, which has a high-refraction layer of λ/2 containing titanium dioxide as a major component.

In general, however, the heat resistance of such optical elements having an antireflection film provided on a plastic substrate is not good, compared with that of optical elements having an antireflection film provided on a glass substrate, because of the reason that the former cannot be heated during vapor deposition. Therefore, optical elements having an antireflection film provided on a plastic substrate and having improved heat resistance have been desired.

The object of this invention is to provide an optical element having an antireflection film on a plastic substrate and having good heat resistance.

US-A-5725959 discloses an optical element comprising a plastic substrate and an anti-reflection film thereon,
wherein the anti-reflection film comprises layers of the type λ/4-λ/2-λ/4 or λ/4-λ/4-λ/2-λ/4 in that order on the substrate, lambda being the wavelength of light. One layer may be constituted as an equivalent film comprising two or three sub-layers.

The Journal of the Optical Society of America, Vol. 52 (4), pp 431-436 (April 1962) discloses the use of equivalent films in the design of multi-layer anti-reflection coatings in the infrared.

DB-A-1381185 discloses multilayer anti-reflection films for ultraviolet rays using equivalent films for achieving certain diffraction indices.

Derwent WPI; AN: 1991-018878 (JP(A)2291501) discloses an anti-reflection film provided on a plastic base material and comprising a base layer consisting of silicon oxide, a first layer consisting of a three-layer equivalent layer formed by a titanium oxide layer, a silicon dioxide layer, and a titanium dioxide layer, a second layer consisting of titanium dioxide, and a third layer consisting of silicon dioxide. The plastic base material is preferably a plastic lens.

DE-A1-4427215 discloses transparent and electrically conductive ultra-thin films on substrates of glass, ceramics, and organic polymers. Such a film may consist of niobium.

### Means for Solving the Problems

The present inventors have assiduously studied to solve the problems noted above, and, as a result, have found that the heat resistance of the optical element is significantly improved by novel means of an equivalent film of at least three layers, while utilizing a high-reflection layer and a layer made of a low-refraction substance, silicon dioxide.

Specifically, the invention provides an optical element according to claim 1.

An equivalent film is a film comprising more than one layer derived from different stable materials. By way of an equivalent film optical properties (e.g. refractive index), which are desired can be obtained, even if these can not be obtained using a single layer only. Preferred embodiments of the invention are indicated in the dependent claims.

### Modes for Carrying out the Invention

In the invention, if the high-refraction layer of λ/2 is a three-layered equivalent film, the optical element having good heat resistance and antireflection property is obtained. For further improving the heat resistance and the antireflection property, the high-reflection layer of λ/2 may be made of an equivalent film of more than three sub-layers.

In view of obtaining good heat resistance and antireflection property, the odd-numbered sub-layer of the equivalent film of λ/2 is preferably a sub-layer containing a known high-refraction vapor-depositing substance such as titanium oxide, zirconium oxide, tantalum oxide and niobium oxide, more preferably a sub-layer made of at least one vapor-depositing substance selected from TiO₂, Ta₂O₅ and Nb₂O₅, and most preferably a sub-layer of Nb₂O₅ as the vapor-depositing substance. In view of the production efficiency, it is desirable that the odd-numbered sub-layers all have the same film composition.

The resultant refractive index of the high-refraction layer of λ/2 is in the range of from 1.80 to 2.40, but preferably in the range of from 1.85 to 2.25 for better physical properties. The film constitution of the high-refraction layer of λ/2 is so made that it satisfies the defined range of the refractive index.

In the invention, the layer of λ/4 to be formed on the high-refraction layer of λ/2 is preferably a silicon dioxide layer. The layer of λ/4 to be formed under the high-refraction layer of λ/2 is preferably an equivalent film of at least two sub-layers for good antireflection property and heat resistance. The film is preferably constructed of a two-layered equivalent film made of a silicon dioxide layer and a layer of a high-refraction vapor-depositing substance such as titanium oxide, zirconium oxide, tantalum oxide and niobium oxide, or a two-layered equivalent film made of a silicon dioxide layer and a niobium oxide layer.

In view of the production efficiency, it is desirable that the raw materials for vapor deposition in forming the equivalent film of λ/4 are the same as those for vapor deposition in forming the equivalent film of λ/2.

For forming the preferred niobium oxide layer, a method using 100 % niobium oxide for the vapor-depositing substance to form the layer according to an ion-assisted process , or a method of sintering a powder containing niobium oxide, zirconium oxide and yttrium oxide and optionally containing aluminum oxide, generating a vapor of the oxide mixture from the sintered material, and depositing the vapor on a substrate are preferably employed.

In the method of depositing the vapor on the substrate, a blend ratio of the material to be sintered is preferably such that niobium oxide accounts for from 60 to 90 % by weight of the whole of the composition for vapor deposition, zirconium oxide for from 5 to 20 % by weight, and yttrium oxide for from 5 to 35 % by weight, for ensuring good physical properties of the film. In case where aluminum oxide is added, its amount is preferably from 0.3 to 7.5 % by weight of the total of zirconium oxide and yttrium oxide therein.

The optical element of the invention has a basic layer provided between the plastic substrate and the antireflection film. Metallic niobium is the material of the basic layer. In case of metallic niobium, its film thickness is preferably from 0.005 λ to 0.015 λ, for ensuring the film transparency.

The advantages of the preferred basic layer of metallic niobium are that it ensures good adhesiveness between the plastic substrate and the antireflection film, it is excellent in heat resistance, impact resistance and abrasion resistance, and its absorption intrinsic to metal is low. Preferably, the metallic niobium (Nb) layer is formed in an ion-assisted process.

In the ion-assisted process, argon (Ar) is preferred for the ionizing gas for preventing oxidation of the film being formed. This stabilizes the quality of the film formed and enables easy control of the thickness of the film by the use of an optical film thickness meter.

For ensuring good adhesiveness between the plastic substrate and the basic layer and for ensuring good uniformity of the initial film morphology in vapor deposition in the ion-assisted process, the plastic substrate may be subjected to ion gun pretreatment before the basic layer is formed thereon. The ionizing gas in the ion gun pretreatment may be any of oxygen or Ar. For the preferred power range, the accelerating voltage is from 50 V to 200 V, and the accelerating current is from 50 mA to 150 mA.

An ordinary vapor deposition process, an ion-assisted process or the like is employable for forming the antireflection film in the optical element of the invention.

The plastic substrate used for the optical substrate of the invention is not specifically defined, including, for example, methyl methacrylate homopolymers, copolymers of methyl methacrylate and one or more other monomers, diethylene glycol bisallyl carbonate homopolymers, copolymers of diethylene glycol bisallyl carbonate and one or more other monomers, sulfur-containing copolymers, halogen-containing copolymers, polycarbonates, polystyrenes, polyvinyl chlorides, unsaturated polyesters, polyethylene terephthalates, and polyurethanes.

The optical element of the invention has a cured film between the plastic substrate and the basic layer.

For the cured film, generally used is one made by curing a coating composition that comprises metal oxide colloid particles and an organosilicon compound.

The metal oxide colloid particles may be, for example, colloid particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO) or antimony oxide (Sb₂O₅). One or more of these metal oxides may be used either singly or in admixture of two or more thereof.

The invention further provides an optical element having an antireflection film which comprises a plastic substrate having a basic layer and an antireflection film of a λ/4 - λ/2 - λ/4 type provided thereon, wherein
the basic layer and the antireflection film are of a layer construction of 1st to 7th, sub-layers of basic layer (1st sub-layer) and λ/4 (2nd and 3rd sub-layers) - λ/2 (4th to 6th sub-layers) - λ/4 (7th sub-layer), and which satisfies at least one of the requirements a) to j) set forth below:
a) the 1st sub-layer is a silicon dioxide layer having a refractive index of from 1.43 to 1.47,
b) the 2nd sub-layer is a high-refraction layer having a refractive index of from 2.04 to 2.37,
c) the 3rd sub-layer is a silicon dioxide layer having a refractive index of from 1.43 to 1.47,
d) the 4th sub-layer is a high-refraction layer having a refractive index of from 2.04 to 2.37,
e) the 5th sub-layer is a silicon dioxide layer having a refractive index of from 1.43 to 1.47,
f) the 6 th sub-layer is a high-refraction layer having a refractive index of from 2.04 to 2.37,
g) the 7th sub-layer is a silicon dioxide layer having a refractive index of from 1.43 to 1.47,
h) the resultant refractive index of λ/4 (2nd and 3rd sub-layers) is from 1.65 to 1.80,
i) the resultant refractive index of λ/2 (4th to 6th sub-layers) is from 1.85 to 2.25, or
j) the high-refraction layers (2nd, 4th and 6th sub-layers) are each constructed of at least one metal oxide selected from titanium oxide, niobium oxide and tantalum oxide..

For preferred embodiments of the optical element of the invention, for example, mentioned are the following constitutions (a) to (c).

**Table 1**

| Constitution (a) | | | |
|---|---|---|---|
| Plastic substrate | | Range of refractive index | |
| 1st sub-Layer (SiO₂ layer) | Basic layer | 1.43 to 1.47 | |
| 2nd sub-Layer (high-refraction layer) | λ/4 | 2.04 to 2.37 | Resultant refractive index 1.65 to 1.80 |
| 3rd sub-Layer (SiO₂ layer) | | 1.43 to 1.47 | |
| 4th sub-Layer (high-refraction layer) | λ/2 | 2.04 to 2.37 | Resultant refractive index 1.85 to 2.25 |
| 5th sub-Layer (SiO₂ layer) | | 1.43 to 1.47 | |
| 6th sub-Layer (high-refraction layer) | | 2.04 to 2.37 | |
| 7th sub-Layer (SiO₂ layer) | λ/4 | 1.40 to 1.47 | |

| Constitution (b) | | | |
|---|---|---|---|
| Plastic substrate | | Range of refractive index | |
| 1st sub-Layer (SiO₂ layer) | Basic layer | 1.43 to 1.47 | |
| 2nd sub-Layer (high-refraction layer) | λ/4 | 2.04 to 2.37 | Resultant refractive index |
| 3rd sub-Layer (SiO₂ layer) | | 1.43 to 1.47 | 1.65 to 1.80 |
| 4th sub-Layer (high-refraction layer | λ/2 | 2.04 to 2.37 | Resultant refractive index 1.85 to 2.25 |
| 5th sub-Layer (SiO₂ layer) | | 1.43 to 1.47 | |
| 6th sub-Layer (high-refraction layer) | | 2 .04 to 2.37 | |
| 7th sub-Layer (SiO₂ layer) | | 1.43 to 1.47 | |
| 8th sub-Layer (high-refraction layer) | | 2.04 to 2.37 | |
| 9th sub-Layer (SiO₂ layer) | λ/4 | 1.43 to 1.47 | |

| Constitution (c) | | | |
|---|---|---|---|
| Plastic substrate | | Range of Refractive Index | |
| 1st sub-Layer (metallic niobium layer) | Basic layer Film thickness: 0.005 λ to 0.015 λ | 1.40 to 1.47 | |
| 2nd sub-Layer (SiO₂ layer) | λ/4 | 1.43 to 1.47 | Resultant refractive index 1.65 to 1.80 |
| 3rd sub-Layer (high-refraction layer) | | 2.04 to 2.37 | |
| 4th sub-Layer (SiO₂ layer) | | 1.43 to 1.47 | |
| 5th sub-Layer (high-refraction layer) | λ/2 | 2.04 to 2.37 | Resultant refractive index 1.85 to 2.25 |
| 6th sub-Layer (SiO₂ layer) | | 1.43 to 1.47 | |
| 7th sub-Layer (high-refraction layer) | | 2.04 to 2.37 | |
| 8th sub-Layer (SiO₂ layer) | λ/4 | 1.43 to 1.47 | |

### Examples

The invention is described in more detail with reference to the following Examples, which, however, are not intended to restrict the scope of the invention.

The physical properties of the optical elements obtained in the following Examples 1 to 6 were measured according to the methods mentioned below.
(1) Luminous transmittance:
   Using a spectrophotometer, U-3410 made by Hitachi, Ltd., the luminous transmittance, Y of a plastic lens as a sample, having an antireflection film on both surfaces, was measured.
(2) Luminous reflectance:
   Using a spectrophotometer, U-3410 made by Hitachi, Ltd., the luminous reflectance, Z of a plastic lens as a sample, having an antireflection film on both surfaces, was measured.
(3) Adhesiveness:
   Using a cutting tool, the surface of a plastic lens was cut to have 100 cross-cuts of 1 mm × 1 mm each. An adhesive tape, Cellotape was stuck on its cross-cut area, and peeled off at a stroke. The number of remained cross-cuts was counted and shown in the following Tables, in which (number of cross-cuts remained)/100 indicates the adhesiveness.
(4) Abrasion resistance:
   The surface of a plastic lens was rubbed with steel wool under a load of 1 kgf/cm2 applied thereto. After 20 strokes of rubbing, the surface condition of the plastic lens was evaluated according to the following criteria:
   UA: Scratched little.
   A: A few thin scratch marks found.
   B: Many thin scratch marks and a few thick scratch marks found.
   C: Many thin and thick scratch marks found.
   D: Almost completely peeled.
(5) Heat resistance:
   A plastic lens was heated in a dry oven for 1 hour, and the temperature at which it cracked was read. Specifically, it was heated first at 50°C, the temperature was elevated at intervals of 5°C, and the temperature at which it cracked was read.
(6) Alkali resistance:
   A plastic lens was dipped in an aqueous 10 % NaOH solution for 1 hour, and its surface condition was evaluated according to the following criteria:
   UA: Changed little.
   A: A few peeled dots found.
   B: Many peeled dots found everywhere on the surface.
   C: Many peeled dots found everywhere on the surface, and a few peeled squares found.
   D: Almost completely peeled.
(7) Impact resistance:
   A plastic lens having a center thickness of 2.0 mm and a power of lens of 0.00 was prepared and subjected to a drop ball test as defined by FDA. "O" indicates good samples; and "×" indicates rejected samples.

### Examples 1 to 6:

### Preparation of substrate A and hard coat layer A

90 parts by weight of colloidal silica (Snowtex-40, available from Nissan Chemical Industries, Ltd.), 81.6 parts by weight of methyltrimethoxysilane and 176 parts by weight of γ-glycidoxypropyltrimethoxysilane as organosilicon compounds, 2.0 parts by weight of 0.5 N hydrochloric acid, 20 parts by weight of acetic acid, and 90 parts by weight of water were charged into a glass container, and the solution was stirred at room temperature for 8 hours. Then, the resulting solution was left at room temperature for 16 hours to obtain a hydrolyzed solution. To this solution were added 120 parts by weight of isopropyl alcohol, 120 parts by weight of n-butyl alcohol, 16 parts by weight of aluminum acetylacetone, 0.2 parts by weight of a silicone surfactant, and 0.1 parts by weight of a UV absorbent. The mixture was stirred at room temperature for 8 hours, and then aged at room temperature for 24 hours to obtain a coating solution.

A plastic lens substrate (made from diethylene glycol bisallyl carbonate, and having a refractive index of 1.50, a center thickness of 2.0 mm and a power of lens of 0.00 - this may be hereinafter referred to as "substrate A"), which had been pretreated with an aqueous alkaline solution, was dipped in the coating solution. After completion of dipping, the plastic lens was taken out at a pulling rate of 20 cm/min. Then, the plastic lens was heated at 120°C for 2 hours to form a cured film. Next, the resulting plastic lens was subjected to an ion gun treatment according to an ion-assisted process using an Ar gas under the condition of the ion acceleration voltage and exposure time as shown in Tables 1 to 6, thereby making it have a cured hard coat layer (this is referred to as "layer A").

### Formation of basic layer and antireflection film

Next, a functional film composed of 1st to 8th sub-layers shown in Tables 1 to 3 was formed on the hard coat layer A, according to an ion-assisted process under the condition shown in Tables 1 to 3, thereby obtaining plastic lenses.

The plastic lenses were evaluated according to the test methods (1) to (7) mentioned above, and the results are shown in Tables 1 to 6. In the Tables, λ indicates the wavelength of the light applied, and λ = 500 nm. The resultant refractive indices of λ/4 and λ/2 in Examples 1 to 6 are shown in Table 8.

**Table 1**

| | | Example 1 | | | | Example 2 | | | |
|---|---|---|---|---|---|---|---|---|---|
| Plastic lens substrate | | Diethylene glycol bisallyl carbonate (Substrate A) | | | | Diethylene glycol bisallyl carbonate (Substrate A) | | | |
| Hard coat layer | | Layer A | | | | Layer A | | | |
| Ion acceleration voltage for pretreatment | | 150 V | | | | 150 V | | | |
| Current | | 100 mA | | | | 100 mA | | | |
| Exposure time | | 60 sec | | | | 60 sec | | | |
| Gas used | | Ar | | | | Ar | | | |

| | | Type of film | Film thickness | Setting values for ion gun | | Type of film | Film thickness | Setting values for ion gun | |
|---|---|---|---|---|---|---|---|---|---|
| 1st sub-layer | Basic layer | Nb | 0.008 λ | 150 V | 100 mA | Nb | 0.008 λ | 150 V | 100 mA |
| 2nd sub-layer | λ/4 | SiO₂ | 0.0157 λ | 450 V | 160 mA | SiO₂ | 0.044 λ | 450 V | 160 mA |
| 3rd sub-layer | | TiO₂ | 0.0567 λ | 360 V | 105 mA | TiO₂ | 0.058 λ | 360 V | 105 mA |
| 4th sub-layer | | SiO₂ | 0.098 λ | 450 V | 160 mA | SiO₂ | 0.097 λ | 450 V | 160 mA |
| 5th sub-layer | λ/2 | TiO₂ | 0.2329 λ | 360 V | 105 mA | TiO₂ | 0.196 λ | 360 V | 105 mA |
| 6th sub-layer | | SiO₂ | 0.0218 λ | 450 V | 160 mA | SiO₂ | 0.047 λ | 450 V | 160 mA |
| 7th sub-layer | | TiO₂ | 0.2215 λ | 360 V | 105 mA | TiO₂ | 0.176 λ | 360 V | 105 mA |
| 8th sub-layer | λ/4 | SiO₂ | 0.2509 λ | 450 V | 160 mA | SiO₂ | 0.260 λ | 450 V | 160 mA |
| Gas used for ion assistance | | Ar gas for Nb and SiO₂ Mixed gas of O₂/Ar (1/1) for TiO₂ | | | | Ar gas for Nb and SiO₂ Mixed gas of O₂/Ar (1/1) for TiO₂ | | | |

| Evaluation of performance of plastic lens | | | | | | | | | |
|---|---|---|---|---|---|---|---|---|---|
| Luminous reflectance, Y % | | 0.68 % | | | | 0.82 % | | | |
| Luminous transmittance, Z % | | 99.3 % | | | | 99.0 % | | | |
| Adhesiveness | | 100/100 | | | | 100/100 | | | |
| Abrasion resistance | | UA to A | | | | UA to A | | | |
| Heat resistance | | 100°C | | | | 100°C | | | |
| Alkali resistance | | UA to A | | | | UA to A | | | |
| Impact resistance | | O | | | | O | | | |

**Table 2**

| | | Example 3 | | | | Example 4 | | | |
|---|---|---|---|---|---|---|---|---|---|
| Plastic lens substrate | | Diethylene glycol bisallyl carbonate (Substrate A) | | | | Diethylene glycol bisallyl carbonate (Substrate A) | | | |
| Hard coat layer | | Layer A | | | | Layer A | | | |
| Ion acceleration voltage for pretreatment | | 150 V | | | | 150 V | | | |
| Current | | 100 mA | | | | 100 mA | | | |
| Exposure time | | 60 sec | | | | 60 sec | | | |
| Gas used | | Ar | | | | Ar | | | |

| | | Type of film | Film thickness | Setting values for ion gun | | Type of film | Film thickness | Setting values for ion gun | |
|---|---|---|---|---|---|---|---|---|---|
| 1st sub-layer | Basic layer | Nb | 0.008 λ | 150 V | 100 mA | Nb | 0.008 λ | 150 V | 100 mA |
| 2nd sub-layer | λ/4 | SiO₂ | 0.0292 λ | 450 V | 160 mA | SiO₂ | 0.0209 λ | 450 V | 160 mA |
| 3rd sub-layer | | Ta₂O₅ | 0.0189 λ | 420 V | 120 mA | Ta₂O₅ | 0.052 λ | 420 V | 120 mA |
| 4th sub-layer | | SiO₂ | 0.5840 λ | 450 V | 160 mA | SiO₂ | 0.1084 λ | 450 V | 160 mA |
| 5th sub-layer | λ/2 | Tia₂O₅ | 0.1336 λ | 420 V | 120 mA | Ta₂O₅ | 0.1880 λ | 420 V | 120 mA |
| 6th sub-layer | | SiO₂ | 0.0593 λ | 450 V | 160 mA | SiO₂ | 0.484 λ | 450 V | 160 mA |
| 7th sub-layer | | Ta₂O₅ | 0.2498 λ | 420 V | 120 mA | Ta₂O₅ | 0.1820 λ | 420 V | 120 mA |
| 8th sub-layer | λ/4 | SiO₂ | 0.2623 λ | 450 V | 160 mA | SiO₂ | 0.2681 λ | 450 V | 160 mA |
| Gas used for ion assistance | | Ar gas for Nb and SiO₂ Mixed gas of O₂/Ar (9/1) for Ta₂O₅ | | | | Ar gas for Nb and SiO₂ Mixed gas of O₂/Ar (9/1) for Ta₂O₅ | | | |

| Evaluation of performance of plastic lens | | | | | | | | | |
|---|---|---|---|---|---|---|---|---|---|
| Luminous reflectance, Y % | | 0.80 % | | | | 0.80 % | | | |
| Luminous transmittance, Z % | | 99.1 % | | | | 99.1 % | | | |
| Adhesiveness | | 100/100 | | | | 100/100 | | | |
| Abrasion resistance | | UA | | | | UA | | | |
| Heat resistance | | 95°C | | | | 95°C | | | |
| Alkali resistance | | UA | | | | UA | | | |
| Impact resistance | | O | | | | O | | | |

**Table 3**

| | | Example 5 | | | | Example 6 | | | |
|---|---|---|---|---|---|---|---|---|---|
| Plastic lens substrate | | Diethylene glycol bisallyl carbonate (Substrate A) | | | | Diethylene glycol bisallyl carbonate (Substrate A) | | | |
| Hard coat layer | | Layer A | | | | Layer A | | | |
| Ion acceleration voltage for pretreatment | | 150 V | | | | 150 V | | | |
| Current | | 100 mA | | | | 100 mA | | | |
| Exposure time | | 60 sec | | | | 40 sec | | | |
| Gas used Gas used | | Ar | | | | Ar | | | |

| | | Type of film | Film thickness | Setting values for ion gun | | Type of film | Film thickness | Setting values for ion gun | |
|---|---|---|---|---|---|---|---|---|---|
| 1st Sub-layer | Basic layer | Nb | 0.008 λ | 150 V | 100 mA | Nb | 0.008 λ | 150 V | 100 mA |
| 2nd Sub-layer | λ/4 | SiO₂ | 0.0209 λ | 450 V | 160 mA | SiO₂ | 0.0209 λ | 450 V. | 160 mA |
| 3rd Sub-layer | | Nb₂O₅ | 0.0527 λ | 360 V | 105 mA | Nb₂O₅ | 0.0527 λ | 360 V | 105 mA |
| 4th Sub-layer | | SiO₂ | 0.1084 λ | 450 V | 160 mA | SiO₂ | 0.1084 λ | 450 V | 160 mA |
| 5th Sub-layer | λ/2 | Nb₂O₅ | 0.1880 λ | 360 V | 105 mA | Nb₂O₅ | 0.1880 λ | 360 V | 105 mA |
| 6th Sub-layer | | SiO₂ | 0.0484 λ | 450 V | 160 mA | SiO₂ | 0.0484 λ | 450 V | 160 mA |
| 7th Sub-layer | | Nb₂O₅ | 0.1820 λ | 360 V | 105 mA | Nb₂O₅ | 0.1820 λ | 360 V | 105 mA |
| 8th Sub-layer | λ/4 | SiO₂ | 0.2681 λ | 450 V | 160 mA | SiO₂ | 0.2681 λ | 450 V | 160 mA |
| Gas used for ion assistance | | Ar gas for Nb and SiO₂ Mixed gas of O₂/Ar (9/1) for Nb₂O₅ | | | | Ar gas for Nb and SiO₂ Mixed gas of O₂/Ar (9/1) for Nb₂O₅ | | | |

| Evaluation of performance of plastic lens | | | | | | | | | |
|---|---|---|---|---|---|---|---|---|---|
| Luminous reflectance, Y % | | 0.68 % | | | | 0.68 % | | | |
| Luminous transmittance, Z % | | 99.3 % | | | | 99.3 % | | | |
| Adhesiveness | | 100/100 | | | | 100/100 | | | |
| Abrasion resistance | | UA to A | | | | UA to A | | | |
| Heat resistance | | 100°C | | | | 100°C | | | |
| Alkali resistance | | UA to A | | | | UA to A | | | |
| Impact resistance | | O | | | | O | | | |

### Examples 7 to 24, and Comparative Examples 1 to 6:

The physical properties of the optical elements obtained in Examples 7 to 24 and Comparative Examples 1 to 6 were evaluated according to the methods mentioned below.
(1) Melt condition of vapor-depositing composition:
   The melt condition was determined according to the following criteria:
   UA: Not splashed.
   A: Splashed a little.
   B: Splashed frequently.
   C: Always splashed.
(2) Attachment state of fine particles:
   The attachment state of fine particles on the lens surface by splash and so on was determined according to the following criteria:
   UA: No fine particles are found.
   A: Fine particles are found at 1 to 5 spots.
   B: Fine particles are found at 6 to 10 spots.
   C: Fine particles are found at 11 or more spots.
(3) Alkali resistance test:
   A plastic lens was dipped in an aqueous 10 % NaOH solution. After 30 minutes and 60 minutes, the lens was determined as to whether or not the coating film had been peeled, and as to whether or not the lens surface had been roughened.
   UA: Few peeled dots are found.
   A: Small peeled dots of at most 0.1 mm in size are found on the entire surface, or a few peeled dots of around 0.3 mm in diameter are found.
   B: The density of peeled dots is higher than in the rank A, and the proportion of larger peeled dots is higher than in the rank A.
   C: Peeled dots of around 0.3 mm in size are found everywhere on the surface, or the density of small peeled dots is high.
   D: Peeled dots are much found everywhere on the surface, and the surface looks white. All the others inferior to those samples are in the rank D.
(4) Abrasion resistance test:
   The surface of a plastic lens is rubbed with steel wool of #0000. After 10 strokes of rubbing, the surface condition of the plastic lens was evaluated according to the following criteria:
   UA: Scratched little.
   A: Scratched slightly.
   B: Much scratched.
   C: Coating film swollen.
(5) Adhesiveness test:
   According to JIS-Z-1522, the surface of a plastic lens was cut to have 10 × 10 cross-cuts, and tested three times for cross-cut peeling with an adhesive tape, Cellotape. The number of the cross-cuts remained was counted.
(6) Luminous reflectance:
   Using a spectrophotometer, U-3410 made by Hitachi, Ltd., the luminous reflectance, Y of a plastic lens was measured.
(7) Luminous transmittance:
   Using a spectrophotometer, U-3410 made by Hitachi, Ltd., the luminous transmittance, Z of a plastic lens was measured.
(8) Absorbance:
   The absorbance of a plastic lens was obtained by subtracting the luminous reflectance and the luminous transmittance from 100%.
(9) Heat resistance test:
   An optical element having an antireflection film immediately after forming a vapor deposition film was heated in an oven for 1 hour, and checked as to it cracked or not. Specifically, it was heated first at 50°C, the temperature was elevated at intervals of 5°C, and the temperature at which it cracked was read.
   For the heat resistance test with a lapse of time, an optical element having an antireflection film immediately after forming a vapor deposition film was exposed in the air for 2 months, and evaluated in the same heat resistance test as above.

### Preparation of substrate A and hard coat layer A

In the same manner as in Examples 1 to 6, a substrate A and a hard coat layer A were prepared.

### Preparation of substrate B and hard coat layer B

142 parts by weight of an organosilicon compound, γ-glycidoxypropyltrimethoxysilane was charged into a glass container, to which were dropwise added 1.4 parts by weight of 0.01 N hydrochloric acid and 32 parts by weight of water with stirring. After completion of the addition, the mixture was stirred for 24 hours to obtain a solution of hydrolyzed γ-glycidoxypropyltrimethoxysilane. To the solution, added were 460 parts by weight of stannic oxide-zirconium oxide composite sol (dispersed in methanol, having a total metal oxide content of 31.5 % by weight and having a mean particle size of from 10 to 15 millimicrons), 300 parts by weight of ethyl cellosolve, 0.7 parts by weight of a lubricant, silicone surfactant, and 8 parts by weight of a curing agent, aluminum acetylacetonate. After well stirring, the mixture was filtered to prepare a coating solution.

Next, a plastic lens substrate (a plastic lens for eyeglass, EYAS (a trade name) made by Hoya Corporation, having a refractive index of at most 1.60 - this may be hereinafter referred to as "substrate B"), which had been pretreated with an aqueous alkaline solution, was dipped in the coating solution. After dipping, the plastic lens was taken out at a pulling rate of 20 cm/min. Then, the plastic lens was heated at 120°C for 2 hours to form a hard coat layer (the layer is referred to as "layer B").

### Preparation of substrate C and hard coat layer C

100 parts by weight of an organosilicon compound, γ-glycidoxypropyltrimethoxysilane was charged into a glass container, to which were added 1.4 parts by weight of 0.01 N hydrochloric acid and 23 parts by weight of water with stirring. After the addition, the mixture was stirred for 24 hours to obtain a solution of hydrolyzed γ-glycidoxypropyltrimethoxysilane. Next, 200 parts by weight of an inorganic particulate substance, composite sol of particles composed mainly of titanium oxide, zirconium oxide and silicon oxide (dispersed in methanol, having a total solid content of 20 % by weight and having a mean particle size of from 5 to 15 millimicrons - in this, the atomic ratio of Ti/Si in the core fine particles is 10, and the ratio by weight of the shell to the core is 0.25) was mixed with 100 parts by weight of ethyl cellosolve, 0.5 parts by weight of a lubricant, silicone surfactant, and 3.0 parts by weight of a curing agent, aluminum acetylacetonate. The resulting mixture was added to the solution of hydrolyzed γ-glycidoxypropyltrimethoxysilane, and well stirred. The mixture was filtered to prepare a coating solution.

Next, a plastic lens substrate (a plastic lens for eyeglass, TESLAID (a trade name) made by Hoya Corporation, having a refractive index of 1.71 - this may be hereinafter referred to as "substrate C"), which had been pretreated with an aqueous alkaline solution, was dipped in the coating solution. After completion of dipping, the plastic lens was taken out at a pulling rate of 20 cm/min. Then, the plastic lens was heated at 120°C for 2 hours to form a hard coat layer (the layer is referred to as "layer C").

### Preparation of basic layer and antireflection film

Next, a multi-layered functional film as shown in Tables 4 to 7 was formed on the hard coat layer A, B or C, according to the process condition shown in Tables 4 to 7. Thus, were obtained plastic lenses.

The plastic lenses were evaluated according to the test methods (1) to (7) mentioned above, and the results are shown in the Tables. In the Tables, λ indicates the wavelength of the light applied, and λ = 500 nm.

In Examples 7 to 12, the composition A in the Tables was subjected to film formation not according to an ion-assisted process. The film made of the composition A in Examples 13 to 18, and the niobium oxide layer in Examples 19 to 24 were formed according to an ion-assisted process, in which the ratio of oxygen/argon was 9/1, and the ion gun condition was 320 A and 140 mA. In Examples 25 to 27, the high-refraction substance used was titanium oxide, and its film was formed not according to an ion-assisted process.

The composition A for Examples 7 to 18 in Tables 4 and 5 means a film made of a three-component vapor-depositing composition, which was prepared by mixing Nb₂O₅ powder, ZrO₂ powder and Y₂O₃ powder and then sintering the mixture under a pressure of 300 kg/cm2 at a temperature of 1300°C (Nb₂O₅/ZrO₂/Y₂O₃ = (76 to 90 %)/(16.6 to 5 %)/(7.4 to 5 %), on a weight basis).

The resultant refractive indices of the equivalent films, λ/4 and λ/2 in Examples 1 to 27 are shown in Table 8.

In Comparative Examples 1 and 2, tantalum oxide was used as the high-refraction vapor-depositing substance. In these, a basic layer composed of silicon dioxide; a two-layered equivalent film of λ/4 composed of a tantalum oxide layer and a silicon dioxide layer; a tantalum oxide layer of λ/2; and a silicon dioxide layer of λ/4 were formed.

In Comparative Example 3, the hard coat layer C, the substrate C, and tantalum oxide as the high-refraction vapor-depositing substance were used. In this, a 3rd layer composed of silicon dioxide; a two-layered equivalent film of λ/4 composed of a tantalum oxide layer and a silicon dioxide layer; a tantalum oxide layer of λ/2; and a silicon dioxide layer of λ/4 were formed.

In Comparative Examples 4 and 5, titanium oxide was used as the high-refraction vapor-depositing substance. In these, a basic layer composed of silicon dioxide; a two-layered equivalent film of λ/4 composed of a titanium oxide layer and a silicon dioxide layer; a titanium oxide layer of λ/2; and a silicon dioxide layer of λ/4 were formed.

In Comparative Example 6, the hard coat layer C, the substrate C, and titanium oxide as the high-refraction vapor-depositing substance were used. In this, a 3rd layer composed of silicon dioxide; a two-layered equivalent film of λ/4 composed of a titanium oxide layer and a silicon dioxide layer; a titanium oxide layer of λ/2; and a silicon dioxide layer of λ/4 were formed. In these Comparative Examples 1 to 6, the films were not formed according to an ion-assisted process.

As a result, Comparative Examples 1, 2 and 3 were inferior in the heat resistance to Examples 22, 23 and 24, respectively.

**Table 4**

| | | | Example 7 | Example 8 | Example 9 | Example 10 | Example 11 | Example 12 |
|---|---|---|---|---|---|---|---|---|
| Plastic lens substrate | | | substrate A | Substrate B | substrate C | Substrate A | Substrate B | substrate C |
| Hard coat layer | | | Layer A | Layer B | Layer C | Layer A | Layer B | Layer C |
| 1st sub-Layer | | Basic layer | SiO₂ | SiO₂ | SiO₂ | SiO₂ | SiO₂ | SiO₂ |
| | Film thickness (λ) | | 0.459 | 0.4568 | 0.0698 | 0.801 | 0.6121 | 0.1123 |
| 2nd sub-Layer | | λ/4 | Composition A | Composition A | Composition A | Composition A | Composition A | Composition A |
| | Film thickness (λ) | | 0.0458 | 0.0549 | 0.0407 | 0.032 | 0.0465 | 0.0287 |
| 3rd sub-Layer | | | SiO₂ | SiO₂ | SiO₂ | SiO₂ | SiO₂ | SiO₂ |
| | Film thickness (λ) | | 0.0809 | 0.0671 | 0.5275 | 0.102 | 0.1004 | 0.5762 |
| 4th sub-Layer | | λ/2 | Composition A | Composition A | Composition A | Composition A | Composition A | Composition A |
| | Film thickness (λ) | | 0.14 | 0.1194 | 0.1179 | 0.143 | 0.16 | 0.1035 |
| 5th sub-Layer | | | SiO₂ | SiO₂ | SiO₂ | SiO₂ | SiO₂ | SiO₂ |
| | Film thickness (λ) | | 0.0597 | 0.0543 | 0.0873 | 0.0584 | 0.0519 | 0.1017 |
| 6th sub-Layer | | | Composition A | Composition A | Composition A | Composition A | Composition A | Composition A |
| | Film thickness (λ) | | 0.172 | 0.1658 | 0.1731 | 0.1603 | 0.1685 | 0.1484 |
| 7th sub-Layer | | λ/4 | SiO₂ | SiO₂ | SiO₂ | SiO₂ | SiO₂ | SiO₂ |
| | Film thickness (λ) | | 0.2795 | 0.2673 | 0.2839 | 0.287 | 0.2911 | 0.309 |
| Melt condition of vapor-depositing composition | | | UA | UA | UA | UA | UA | UA |
| Attachment of vapor-deposited fine particles | | | UA | UA | UA | UA | UA | UA |
| Alkali resistance | | | UA | UA | UA | UA | UA | UA |
| Abrasion resistance | | | UA | UA | UA | UA | UA | UA |
| Adhesiveness | | | 100 | 100 | 100 | 100 | 100 | 100 |
| Luminous reflectance Y (%) | | | 0.84 | 0.84 | 0.92 | 0.8 | 1.02 | 1.05 |
| Luminous transmittance z [%] | | | 99.01 | 99 | 98.9 | 99 | 98.74 | 98.7 |
| Absorbance, 100-Y-Z [%] | | | 0.15 | 0.16 | 0.18 | 0.2 | 0.24 | 0.25 |
| Heat resistance (°C) | | | 100 | 110 | 100 | 100 | 110 | 100 |
| Heat resistance (°C) after exposure in the air for 2 months | | | 85 | 95 | 85 | 85 | 95 | 85 |

**Table 5**

| | | | Example 13 | Example 14 | Example 15 | Example 16 | Example 17 | Example 18 |
|---|---|---|---|---|---|---|---|---|
| Plastic lens substrate | | | Substrate A | Substrate B | Substrate C | Substrate A | Substrate B | Substrate C |
| Hard coat layer | | | Layer A | Layer B | Layer C | Layer A | Layer B | Layer C |
| 1st sub-Layer | | Basic layer | SiO₂ | SiO₂ | SiO₂ | SiO₂ | SiO₂ | SiO₂ |
| | Film thickness (λ) | | 0.3101 | 0.4156 | 0.0886 | 0.7431 | 0.5869 | 0.087 |
| 2nd sub-Layer | | λ/4 | Composition A | Composition A | Composition A | Composition A | Composition A | Composition A |
| | Film thickness (λ) | | 0.0374 | 0.0118 | 0.0446 | 0.0355 | 0.0317 | 0.0424 |
| 3rd sub-Layer | | | SiO₂ | SiO₂ | SiO₂ | SiO₂ | SiO₂ | 0.5797 |
| | Film thickness (λ) | | 0.113 | 0.091 | 0.5784 | 0.1300 | 0.0898 | 0.0898 |
| 4th sub-Layer | | λ/2 | Composition A | Composition A | Composition A | Composition A | Composition A | Composition A |
| | Film thickness (λ) | | 0.1616 | 0.0932 | 0.1112 | 0.1568 | 0.1288 | 0.1013 |
| 5th sub-Layer | | | SiO₂ | SiO₂ | SiO₂ | SiO₂ | SiO₂ | SiO₂ |
| | Film thickness (λ) | | 0.0586 | 0.1036 | 0.0961 | 0.069 | 0.0816 | 0.1058 |
| 6th sub-Layer | | | | Composition A | Composition A | Composition A | Composition A | Composition A |
| | Film thickness (λ) | | 0.1815 | 0.1362 | 0.1615 | 0.176 | 0.1487 | 0.1438 |
| 7th sub-Layer | | λ/4 | SiO₂ | SiO₂ | SiO₂ | SiO₂ | SiO₂ | SiO₂ |
| | Film thickness (λ) | | 0.2668 | 0.2906 | 0.282 | 0.2763 | 0.2888 | 0.2824 |
| Melt condition of vapor-depositing composition | | | UA | UA | UA | UA | UA | UA |
| Attachment of vapor-deposited fine particles | | | UA | UA | UA | UA | UA | UA |
| Alkali resistance | | | UA | UA | UA | UA | UA | UA |
| Abrasion resistance | | | UA | UA | UA | UA | UA | UA |
| Adhesiveness | | | 100 | 100 | 100 | 100 | 100 | 100 |
| Luminous reflectance Y (%) | | | 0.8 | 0.84 | 0.81 | 0.8 | 1.02 | 1.08 |
| Luminous transmittance Z [%] | | | 99.05 | 99.01 | | | | |
| Absorbance, 100-Y-Z (%) | | | 0.15 | 0.17 | 99 | 99.01 | 98.75 | 98.68 |
| Heat resistance (°C) | | | 105 | 120 | 0.19 | 0.19 | 0.23 | 0.24 |
| Heat resistance (°C) after exposure in the air for 2 months | | | 90 | 105 | 105 90 | 105 90 | 120 105 | 105 90 |

**Table 6**

| | | | Example 19 | Example 20 | Example 21 | Example 22 | Example 23 | Example 24 |
|---|---|---|---|---|---|---|---|---|
| Plastic lens substrate | | | Substrate A | Substrate B | Substrate C | Substrate A | Substrate B | Substrate C |
| Hard coat layer | | | Layer A | Layer B | Layer C | Layer A | Layer B | Layer C |
| 1st sub-Layer | | Basic layer | SiO₂ | SiO₂ | SiO₂ | SiO₂ | SiO₂ | SiO₂ |
| | Film thickness (λ) | | 0.3101 | 0.4156 | 0.0886 | 0.0478 | 0.4729 | 0.074 |
| 2nd sub-Layer | | λ/4 | Nb₂O₅ | Nb₂O₅ | Nb₂O₅ | Ta₂O₅ | Ta₂O₅ | Ta₂O₅ |
| | Film thickness (λ) | | 0.0374 | 0.0118 | 0.0446 | 0.0829 | 0.0849 | 0.0504 |
| 3rd sub-Layer | | | SiO₂ | SiO₂ | SiO₂ | SiO₂ | SiO₂ | SiO₂ |
| | Film thickness (λ) | | 0.113 | 0.091 | 0.5784 | 0.067 | 0.0648 | 0.5334 |
| 4th sub-Layer | | λ/2 | Nb₂O₅ | Nb₂O₅ | Nb₂O₅ | Ta₂O₅ | Ta₂O₅ | Ta₂O₅ |
| | Film thickness (λ) | | 0.1616 | 0.0932 | 0.1112 | 0.1533 | 0.1259 | 0.1038 |
| 5th sub-Layer | | | SiO₂ | SiO₂ | SiO₂ | SiO₂ | SiO₂ | SiO₂ |
| | Film thickness (λ) | | 0.0586 | 0.1036 | 0.0961 | 0.025 | 0.0266 | 0.0869 |
| 6th sub-Layer | | | Nb₂O₅ | Nb₂O₅ | Nb₂O₅ | Ta₂O₅ | Ta₂O₅ | Ta₂O₅ |
| | Film thickness (λ) | | 0.1815 | 0.1362 | 0.1615 | 0.1533 | 0.1259 | 0.1693 |
| 7th sub-Layer | | λ/4 | SiO₂ | SiO₂ | SiO₂ | SiO₂ | SiO₂ | SiO₂ |
| | Film thickness (λ) | | 0.2668 | 0.2906 | 0.282 | 0.254 | 0.2588 | 0.2773 |
| Melt condition of vapor-depositing composition | | | B | B | B | UA | UA | UA |
| Attachment of vapor-deposited fine particles | | | UA | UA | UA | UA | UA | UA |
| Alkali resistance | | | UA | UA | UA | UA | UA | UA |
| Abrasion resistance | | | UA | UA | UA | UA | UA | UA |
| Adhesiveness | | | 100 | 100 | 100 | 100 | 100 | 100 |
| Luminous reflectance Y (%) | | | 0.8 | 0.84 | 0.81 | 0.99 | 1.02 | 1.05 |
| Luminous transmittance Z (%) | | | 99.05 | 99.01 | 99 | 98.85 | 98.74 | 98.7 |
| Absorbance, 100-Y-Z (%) | | | 0.15 | 0.17 | 0.19 | 0.16 | 0.24 | 0.25 |
| Heat resistance (°C) | | | 105 | 120 | 105 | 100 | 110 | 100 |
| Heat resistance (°C) after exposure in the air for 2 months | | | 90 | 105 | 90 | 85 | 95 | 85 |

**Table 7**

| | | | Example 25 | Example 26 | Example 27 |
|---|---|---|---|---|---|
| Plastic lens substrate | | | Substrate A | Substrate B | Substrate C |
| Hard coat layer | | | Layer A | Layer B | Layer C |
| 1st sub-Layer | | Basic | SiO₂ | SiO₂ | SiO₂ |
| | Film thickness (λ) | layer | 0.51 | 0.421 | 0.079 |
| 2nd sub-Layer | | λ/4 | TiO₂ | TiO₂ | TiO₂ |
| | Film thickness (λ) | | 0.0435 | 0.0224 | 0.275 |
| 3rd sub-Layer | | | SiO₂ | SiO₂ | SiO₂ |
| | Film thickness (λ) | | 0.1089 | 0.0972 | 0.5761 |
| 4th sub-Layer | | λ/2 | TiO₂ | TiO₂ | TiO₂ |
| | Film thickness (λ) | | 0.1468 | 0.1327 | 0.135 |
| 5th sub-Layer | | | SiO₂ | SiO₂ | SiO₂ |
| | Film thickness (λ) | | 0.0689 | 0.0768 | 0.102 |
| 6th sub-Layer | | | TiO₂ | TiO₂ | TiO₂ |
| | Film thickness (λ) | | 0.1474 | 0.1665 | 0.143 |
| 7th sub-Layer | | λ/4 | SiO₂ | SiO₂ | SiO₂ |
| | Film thickness (λ) | | 0.2716 | 0.291 | 0.2954 |
| Melt condition of vapor- depositing composition | | | UA | UA | UA |
| Attachment of vapor- deposited fine particles | | | UA | UA | UA |
| Alkali resistance | | | UA to A | UA to A | UA to A |
| Abrasion resistance | | | A | A | A |
| Adhesiveness | | | 100 | 100 | 100 |
| Luminous reflectance Y (%) | | | 0.84 | 0.081 | 0.81 |
| Luminous transmittance Z (%) | | | 99 | 99.02 | 99 |
| Absorbance, 100-Y-Z (%) | | | 0.16 | 0.17 | 0.19 |
| Heat resistance (°C) | | | 90 | 110 | 95 |
| Heat resistance (°C) after exposure in the air for 2 months | | | 70 | 90 | 75 |

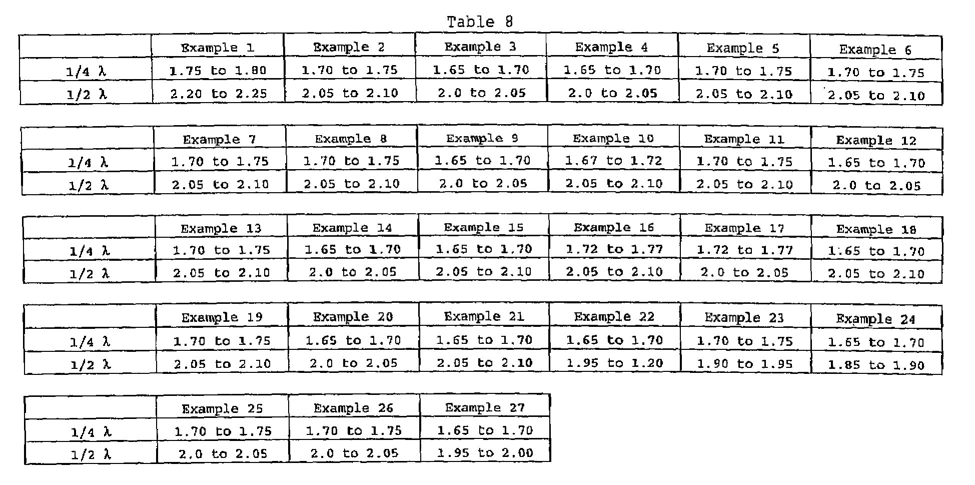

**Table 9**

| | | Comparative Example. 1 | Comparative Example. 2 | Comparative Example. 3 | Comparative Example. 4 | Comparative Example. 5 | Comparative Example. 6 |
|---|---|---|---|---|---|---|---|
| Plastic lens substrate | | Substrate A | Substrate B | Substrate C | Substrate A | Substrate B | Substrate C |
| Hard coat layer | | Layer A | Layer B | Layer C | Layer A | Layer B | Layer C |
| 1st sub-Layer | | SiO₂ | SiO₂ | SiO₂ | SiO₂ | SiO₂ | SiO₂ |
| | Film thickness (λ) | 0.515 | 0.481 | 0.561 | 0.49 | 0.462 | 0.0727 |
| 2nd sub-Layer | | Ta₂O₅ | Ta₂O₅ | Ta₂O₅ | TiO₂ | TiO₂ | TiO₂ |
| | Film thickness (λ) | 0.0781 | 0.0636 | 0.0335 | 0.0632 | 0.0598 | 0.026 |
| 3rd sub-layer | | SiO₂ | SiO₂ | SiO₂ | SiO₂ | SiO₂ | SiO₂ |
| | Film thickness (λ) | 0.0429 | 0.0588 | 0.522 | 0.086 | 0.0803 | 0.525 |
| 4th sub-layer | | Ta₂O₅ | Ta₂O₅ | Ta₂O₅ | TiO₂ | TiO₂ | TiO₂ |
| | Film thickness (λ) | 0.4204 | 0.4205 | 0.054 | 0.488 | 0.5044 | 0.061 |
| 5th sub-layer | | SiO₂ | SiO₂ | SiO₂ | SiO₂ | SiO₂ | SiO₂ |
| | Film thickness (λ) | 0.247 | 0.2351 | 0.054 | 0.249 | 0.0781 | 0.049 |
| 6th sub-Layer | | | | Ta₂O₅ | | | TiO₂ |
| | Film thickness (λ) | | | 0.421 | | | 0.486 |
| 7th sub-Layer | | | | SiO₂ | | | SiO₂ |
| | Film thickness (λ) | | | 0.253 | | | 0.248 |
| Melt condition of vapor-depositing composition | | A | A | A | UA | UA | UA |
| Attachment of vapor-deposited fine particles | | UA | UA | UA | UA | UA | UA |
| Alkali resistance | | UA | UA to A | UA | B | B | B |
| Abrasion resistance | | UA | UA to A | UA | B | B | B |
| Adhesiveness | | 100 | 100 | 100 | 100 | 100 | 100 |
| Luminous reflectance Y (%) | | 1.05 | 1.1 | 1.05 | 0.98 | 0.93 | 0.97 |
| Luminous transmittance Z (%) | | 98.71 | 99.65 | 98.6 | 98.8 | 98.78 | 98.67 |
| Absorbance, 100-Y-Z (%) | | 0.24 | 0.25 | 0.35 | 0.22 | 0.29 | 0.36 |
| Heat resistance (°C) | | 85 | 110 | 85 | 70 | 95 | 80 |
| Heat resistance (°C) after exposure in the air for 2 months | | 55 | 85 | 60 | 45 | 70 | 50 |

As described in detail hereinabove, the optical element having an antireflection film of the invention has the advantages of good luminous reflectance, luminous transmittance, adhesiveness, abrasion resistance, alkali resistance and impact resistance, and has the additional advantage of improved heat resistance.

The invention further provides an antireflection film of a λ/4 - λ/2 - λ/4 or X/4 - λ/4 - λ/2 - λ/4 type (λ = 500 nm), wherein the layer of λ/2 is an equivalent film containing at least three sub-layers and having a refractive index of from 1.80 to 2.40, and the even-numbered sub-layer of the equivalent film is a silicon dioxide layer. Preferably the odd-numbered sub-layer of the equivalent film of λ/2 is a layer of at least one metal oxide selected from titanium oxide, zirconium oxide, niobium oxide and tantalum oxide, more preferably niobium oxide.

The antireflection film as well as the optical element having an antireflection film of the invention may be used for eyeglasses.

## Claims

1. An optical element comprising a plastic substrate; a cured film, obtained by curing a coating composition which comprises metal oxide colloid particles and an organosilicon compound, on said plastic substrate; a basic layer of metallic niobium on said cured film; an antireflection film on said basic layer comprising:
a) layers of the type λ/4 - λ/2 - λ/4 or λ/4 - λ/4 - λ/2 - λ/4 in that order on the substrate, λ being the wavelength of light;
b) wherein the layer of the type λ/2 is an equivalent film containing three or five sub-layers;
c) the equivalent film has a resultant refractive index of from 1.80 to 2.4; and
d) each even-numbered sub-layer of the equivalent film is a silicon dioxide sub-layer.

2. The optical element as claimed in claim 1, wherein each odd-numbered sub-layer of the equivalent film of λ/2 is a sub-layer made of at least one metal oxide selected from titanium oxide, zirconium oxide, niobium oxide and tantalum oxide.

3. The optical element as claimed in claim 1, wherein each odd-numbered sub-layer of the equivalent film of λ/2 is a sub-layer made of niobium oxide.

4. The optical element according to claim 3, wherein the layer of λ/4 formed below the layer of λ/2 is an equivalent film of at least two sub-layers.

5. The optical element according to claim 4, wherein the layer of λ/4 formed below the layer of λ/2 is constructed of the same metal oxide layers used in the odd-numbered and even-numbered sub-layers of λ/2.

6. The optical element according to claim 4, wherein the equivalent film of λ/4 is constructed of a sub-layer made of niobium oxide and a sub-layer made of silicon dioxide.

7. An optical element according to any one of claims 3 to 6, comprising the antireflection film of the λ/4 - λ/2 - λ/4 type, wherein
the basic layer and the antireflection film are of a layer construction of 1^{st} to 7^{th} sub-layers of a basic layer (1^{st} sub-layer) and λ/4 (2^{nd} and 3^{rd} sub-layers) - λ/2 (4^{th} to 6^{th} sub-layers) - λ/4 (7^{th} sub-layer), and which satisfies at least one of the requirements a) to j) set forth below:
a) the 1st sub-layer is a silicon dioxide layer having a refractive index of from 1.43 to 1.47,
b) the 2nd sub-layer is a high-refraction layer having a refractive index of from 2.04 to 2.37,
c) the 3^{rd} sub-layer is a silicon dioxide layer having a refractive index of from 1.43 to 1.47,
d) the 4th sub-layer is a high-refraction layer having a refractive index of from 2.04 to 2.37,
e) the 5th sub-layer is a silicon dioxide layer having a refractive index of from 1.43 to 1.47,
f) the 6th sub-layer is a high-refraction layer having a refractive index of from 2.04 to 2.37,
g) the 7th sub-layer is a silicon dioxide layer having a refractive index of from 1.43 to 1.47,
h) the resultant refractive index of λ/4 (2nd and 3rd sub-layers) is from 1.65 to 1.80,
i) the resultant refractive index of λ/2 (4^{th} to 6^{th} sub-layers) is from 1.85 to 2.25, or
j) the high-refraction sub-layers (2^{nd}, 4^{th} and 6^{th} sub-layers) are each constructed of at least one metal oxide selected from titanium oxide, niobium oxide and tantalum oxide.

8. An optical element according to any one of claims 3 to 7, comprising the antireflection film of a λ/4 - λ/2 - λ/4 type, wherein
the basic layer and the antireflection film are of a layer construction of 1^{st} to 7^{th} sub-layers of a basic layer (1^{st} sub-layer) and λ4 (2^{nd} and 3^{rd} sub-layers) - λ/2 (4^{th} to 6^{th} sub-layers) - λ/4 (7^{th} sub-layer), and wherein
the 1st sub-layer is a silicon dioxide layer having a refractive index of from 1.43 to 1.47,
the 2nd sub-layer is a high-refraction layer having a refractive index of from 2.04 to 2.37,
the 3rd sub-layer is a silicon dioxide layer having a refractive index of from 1.43 to 1.47,
the 4^{th} sub-layer is a high-refraction layer having a refractive index of from 2.04 to 2.37,
the 5th sub-layer is a silicon dioxide layer having a refractive index of from 1.43 to 1.47,
the 6th sub-layer is a high-refraction layer having a refractive index of from 2.04 to 2.37,
the 7th sub-layer is a silicon dioxide layer having a refractive index of from 1.43 to 1.47,
the resultant refractive index of λ/4 (2nd and 3rd sub-layers) is from 1.65 to 1.80,
the resultant refractive index of λ/2 (4^{th} to 6^{th} sub-layers) is from 1.85 to 2.25, or
the high-refraction sub-layers (2^{nd}, 4^{th} and 6^{th} sub-layers) are each constructed of at least one metal oxide selected from titanium oxide, niobium oxide and tantalum oxide.

9. Use of the optical element according to any one of claims 1 to 8 for eyeglasses.

## Patentansprüche

1. Optisches Element, das ein Kunststoffsubstrat aufweist; einen ausgehärteten Film, der durch Aushärten einer Beschichtungszusammensetzung, die Metalloxid-Kolloidpartikel und eine Organosilizium-Verbindung aufweist, auf dem Kunststoffsubstrat erhalten wird; eine Grundschicht aus metallischem Niob auf dem ausgehärteten Film; wobei ein reflektionsmindernder Film auf der Grundschicht aufweist:
a) Schichten des Typs λ/4 - λ/2 - λ/4 oder λ/4 - λ/4 - λ/2 - λ/4 in dieser Reihenfolge auf dem Substrat, wobei λ die Wellenlänge des Lichts ist;
b) wobei die Schicht des Typs λ/2 ein äquivalenter Film ist, der drei oder fünf Unterschichten enthält;
c) der äquivalente Film einen resultierenden Brechungsindex von 1,80 bis 2,4 aufweist; und
d) jede geradzahlige Unterschicht des äquivalenten Films eine Siliziumdioxid-Unterschicht ist.

2. Optisches Element nach Anspruch 1, bei welchem jede ungeradzahlige Unterschicht des äquivalenten Films mit λ/2 eine Unterschicht ist, die aus zumindest einem Metalloxid hergestellt ist, das ausgewählt ist unter Titanoxid, Zirkonoxid, Nioboxid und Tantaloxid.

3. Optisches Element nach Anspruch 1, bei welchem jede ungeradzahlige Unterschicht des äquivalenten Films mit λ/2 eine Unterschicht ist, die aus Nioboxid hergestellt ist.

4. Optisches Element nach Anspruch 3, bei welchem die Schicht mit λ/4, die unterhalb der Schicht mit λ/2 vorgesehen ist, ein äquivalenter Film aus zumindest zwei Unterschichten ist.

5. Optisches Element nach Anspruch 4, bei welchem die Schicht mit λ/4, die unterhalb der Schicht mit λ/2 vorgesehen ist, aus denselben Metalloxidschichten aufgebaut ist, die in den ungeradzahligen und geradzahligen Unterschichten mit λ/2 eingesetzt werden.

6. Optisches Element nach Anspruch 4, bei welchem der äquivalente Film mit λ/4 aus einer Unterschicht aufgebaut ist, die aus Nioboxid hergestellt ist, und aus einer Unterschicht, die aus Siliziumdioxid hergestellt ist.

7. Optisches Element nach einem der Ansprüche 3 bis 6, welches den reflektionsmindernden Film des Typs λ/4 - λ/2 - λ/4 aufweist, wobei
die Grundschicht und der reflektionsmindernde Film eine Schichtkonstruktion mit einer 1. bis einer 7. Unterschicht einer Grundschicht (1. Unterschicht) und λ/4 (2. und 3. Unterschicht) - λ/2 (4. bis 6. Unterschicht) - λ/4 (7. Unterschicht) aufweisen, und zumindest eine der nachstehenden Anforderungen a) bis j) erfüllt ist:
a) die 1. Unterschicht ist eine Siliziumdioxidschicht, die einen Brechungsindex von 1,43 bis 1,47 aufweist,
b) die 2. Unterschicht ist eine stark brechende Schicht mit einem Brechungsindex von 2,04 bis 2,37,
c) die 3. Unterschicht ist eine Siliziumdioxidschicht, die einen Brechungsindex von 1,43 bis 1,47 aufweist,
d) die 4. Unterschicht ist eine stark brechende Schicht, die einen Brechungsindex von 2,04 bis 2,37 aufweist,
e) die 5. Unterschicht ist eine Siliziumdioxidschicht, die einen Brechungsindex von 1,43 bis 1,47 aufweist,
f) die 6. Unterschicht ist eine stark brechende Schicht, die einen Brechungsindex von 2,04 bis 2,37 aufweist,
g) die 7. Unterschicht ist eine Siliziumdioxidschicht, die einen Brechungsindex von 1,43 bis 1,47 aufweist,
h) der resultierende Brechungsindex von λ/4 (2. und 3. Unterschicht) beträgt 1,65 bis 1,80,
i) der resultierende Brechungsindex von λ/2 (4. bis 6. Unterschicht) beträgt 1,85 bis 2,25, oder
j) die stark brechenden Unterschichten (2., 4. und 6. Unterschicht) sind jeweils aus zumindest einem Metalloxid aufgebaut, das ausgewählt ist, unter Titanoxid, Nioboxid und Tantaloxid.

8. Optisches Element nach einem der Ansprüche 3 bis 7, das den reflektionsmindernden Film eines Typs λ/4 - λ/2 - λ/4 aufweist, wobei
die Grundschicht und der reflektionsmindernde Film eine Schichtkonstruktion einer 1. bis 7. Unterschicht einer Grundschicht (1. Unterschicht) und λ/4 (2. und 3. Unterschicht) - λ/2 (4. bis 6. Unterschicht) - λ/4 (7. Unterschicht) aufweisen, und wobei
die 1. Unterschicht eine Siliziumdioxidschicht ist, die einen Brechungsindex von 1,43 bis 1,47 aufweist,
die 2. Unterschicht eine stark brechende Schicht ist, die einen Brechungsindex von 2,04 bis 2,37 aufweist,
die 3. Unterschicht eine Siliziumdioxidschicht ist, die einen Brechungsindex von 1,43 bis 1,47 aufweist,
die 4. Unterschicht eine stark brechende Schicht ist, die einen Brechungsindex von 2,04 bis 2,37 aufweist,
die 5. Unterschicht eine Siliziumdioxidschicht ist, die einen Brechungsindex von 1,43 bis 1,47 aufweist,
die 6. Unterschicht eine stark brechende Schicht ist, die einen Brechungsindex von 2,04 bis 2,37 aufweist,
die 7. Unterschicht eine Siliziumdioxidschicht ist, die einen Brechungsindex von 1,43 bis 1,47 aufweist,
der resultierende Brechungsindex λ/4 (2. und 3. Unterschicht) gleich 1,65 bis 1,80 ist,
der resultierende Brechungsindex von λ/2 (4. bis 6. Unterschicht) gleich 1,85 bis 2,25 ist, oder
die stark brechenden Unterschichten (2., 4. und 6. Unterschicht) jeweils aus zumindest einem Metalloxid
aufgebaut sind, das ausgewählt ist unter Titanoxid, Nioboxid und Tantaloxid.

9. Verwendung des optischen Elements nach einem der Ansprüche 1 bis 8 für Brillengläser.

## Revendications

1. Elément optique comprenant un substrat en plastique ; un film durci obtenu par durcissement d'une composition de revêtement qui comprend des particules colloïdales d'un oxyde métallique et un composé d'organo-silicium, sur ledit substrat en plastique ; une couche de base de niobium métallique sur ledit film durci ; un film anti-réfléchissant sur ladite couche de base comprenant :
a) des couches de type λ/4 - λ/2 - λ/4 ou λ/4 - λ/4 - λ/2 - λ/4 dans cet ordre sur le substrat, λ étant la longueur d'onde de la lumière ;
b) dans lequel la couche de type λ/2 est un film équivalent contenant trois ou cinq sous-couches ;
c) le film équivalent a un indice de réfraction résultant de 1,80 à 2,4 ; et
d) chaque sous-couche ayant un nombre pair du film équivalent est une sous-couche de dioxyde de silicium.

2. Elément optique selon la revendication 1, dans lequel chaque sous-couche ayant un nombre impair du film équivalent de type λ/2 est une sous-couche faite d'au moins un oxyde métallique choisi parmi l'oxyde de titane, l'oxyde de zirconium, l'oxyde de niobium et l'oxyde de tantale.

3. Elément optique selon la revendication 1, dans lequel chaque sous-couche ayant un nombre impair du film équivalent de type λ/2 est une sous-couche constituée d'oxyde'de niobium.

4. Elément optique selon la revendication 3, dans lequel la couche de type λ/4 formée en dessous de la couche de type λ/2 est un film équivalent d'au moins deux sous-couches.

5. Elément optique selon la revendication 4, dans lequel la couche de type λ/4 formée en dessous de la couche de type λ/2 est constituée des mêmes couches d'oxyde métallique que celles utilisées dans les sous-couches ayant un nombre impair et un nombre pair de type λ/2.

6. Elément optique selon la revendication 4, dans lequel le film équivalent de type λ/4 est constitué d'une sous-couche constituée d'oxyde de niobium et d'une sous-couche constituée de dioxyde de silicium.

7. Elément optique selon l'une quelconque des revendications 3 à 6, comprenant le film anti-réfléchissant de type λ/4 - λ/2 - λ/4, dans lequel
la couche de base et le film anti-réfléchissant ont pour construction de couche des 1^{ère} à 7^{ème} sous-couches d'une couche de base (1^{ère} sous-couche) et λ/4 (2^{ème} et 3^{ème} sous-couches) - λ/2 (4^{ème} à 6^{ème} sous-couches) - λ/4 (7^{ème} sous-couche) et qui satisfait à l'une au moins des exigences a) à j) indiquées ci-dessous :
a) la 1^{ère} sous-couche est une couche de dioxyde de silicium ayant un indice de réfraction de 1,43 à 1,47,
b) la 2^{ème} sous-couche est une couche à indice de réfraction élevé ayant un indice de réfraction de 2,04 à 2,37,
c) la 3^{ème} sous-couche est une couche de dioxyde de silicium ayant un indice de réfraction de 1,43 à 1,47,
d) la 4^{ème} sous-couche est une couche à indice de réfraction élevé ayant un indice de réfraction de 2,04 à 2,37,
e) la 5^{ème} sous-couche est une couche de dioxyde de silicium ayant un indice de réfraction de 1,43 à 1, 47,
f) la 6^{ème} sous-couche est une couche à indice de réfraction élevé ayant un indice de réfraction de 2,04 à 2,37,
g) la 7^{ème} sous-couche est une couche de dioxyde de silicium ayant un indice de réfraction de 1,43 à 1,47,
h) l'indice de réfraction résultant de λ/4 (2^{ème} et 3^{ème} sous-couches) est de 1,65 à 1,80,
i) l'indice de réfraction résultant de λ/2 (4^{ème} à 6^{ème} sous-couches) est de 1,85 à 2,25, ou
j) les sous-couches à indice de réfraction élevé (2^{ème}, 4^{ème} et 6^{ème} sous-couches) sont chacune constituée d'au moins un oxyde métallique choisi parmi l'oxyde de titane, l'oxyde de niobium et l'oxyde de tantale.

8. Elément optique selon l'une quelconque des revendications 3 à 7, comprenant le film anti-réfléchissant de type λ/4 - λ/2 - λ/4, dans lequel
la couche de base et le film anti-réfléchissant ont pour construction de couche des 1^{ère} à 7^{ème} sous-couches d' une couche de base (1^{ère} sous-couche) et λ/4 (2^{ème} et 3^{ème} sous-couches) - λ/2 (4^{ème} à 6^{ème} sous-couches) - λ/4 (7^{ème} sous-couche) et dans lequel :
la 1^{ère} sous-couche est une couche de dioxyde de silicium ayant un indice de réfraction de 1,43 à 1,47,
la 2^{ème} sous-couche est une couche à indice de réfraction élevé ayant un indice de réfraction de 2,04 à 2,37,
la 3^{ème} sous-couche est une couche de dioxyde de silicium ayant un indice de réfraction de 1,43 à 1,47,
la 4^{ème} sous-couche est une couche à indice de réfraction élevé ayant un indice de réfraction de 2,04 à 2,37,
la 5^{ème} sous-couche est une couche de dioxyde de silicium ayant un indice de réfraction de 1,43 à 1,47,
la 6^{ème} sous-couche est une couche à indice de réfraction élevé ayant un indice de réfraction de 2,04 à 2,37,
la 7^{ème} sous-couche est une couche de dioxyde de silicium ayant un indice de réfraction de 1,43 à 1,47,
l'indice de réfraction résultant de λ/4 (2^{ème} et 3^{ème} sous-couches) est de 1,65 à 1,80,
l'indice de réfraction résultant de λ/2 (4^{ème} à 6^{ème} sous-couches) est de 1,85 à 2,25, ou
les sous-couches à indice de réfraction élevé (2^{ème}, 4^{ème} et 6^{ème} sous-couches) sont chacune constituée d'au moins un oxyde métallique choisi parmi l'oxyde de titane, l'oxyde de niobium et l'oxyde de tantale.

9. Utilisation de l'élément optique selon l'une quelconque des revendications 1 à 8 pour des verres correcteurs.
